# EUROPEAN PATENT APPLICATION

(11) **EP 1 574 788 A1**
(43) Date of publication of application: **14.09.2005**
(21) Application number: 03780883.9
(22) Date of filing: 18.12.2003
(51) Int. Cl.: F24D 3/16

(54) **HEAT DISSIPATING UNIT FOR FLOOR HEATING SYSTEM**

(30) Priority: 19.12.2002 JP 2002368274; 08.01.2003 JP 2003002373; 05.02.2003 JP 2003027796; 21.10.2003 JP 2003361108
(71) Applicant: Mitsubishi Chemical Functional Products, Inc., Tokyo 100-0005 (JP)
(72) Inventor: INOUE, Michiaki, c/o Mitsubishi Chemical, Inashiki-gun, Ibaraki 300-0332 (JP); SEKI, Hitoshi, c/o Mitsubishi Chemical, Inashiki-gun, Ibaraki 300-0332 (JP); KUGA, Takeshi, c/o Mitsubishi Chemical, Inashiki, Ibaraki 300-0332 (JP)
(74) Representative: HOFFMANN EITLE
(86) International application number: PCT/JP2003/016247
(87) International publication number: WO 2004/057241

(57) **Abstract**

The present invention relates to a radiator for floor heating comprising a base layer having embedded therein piping for passing a heating medium and a composite board which is disposed on the upper side of said base layer and which is formed by bonding metal plates on both sides of a resin sheet core. The radiator of such a structure is capable of complying with the requests for strength, elasticity, heat transfer efficiency, etc.

## Description

### Technical Field

The present invention relates to a radiator for floor heating and a floor structure which can be heated by using it.

### Background Art

Recently, in the buildings such as ordinary houses, apartment houses, hotels, hospitals, homes for the aged, etc., the floor heating system designed to heat the room from the floor to make it more comfortable to live in is prevailing. Usually, the most fundamental of such floor heating system is of a structure in which a base layer having embedded therein piping for passing a heating medium is provided on a support, and heat transfer media such as metal foils are disposed on the upper side of the said base layer to constitute a radiator, with a facing material being provided on the top of such a radiator. Various improvements on such floor heating structure have been proposed. For instance, Japanese Patent Application Laid-Open (KOKAI) No. 2002-81662 proposes to provide a synthetic resin sheet layer on the metal foils of the said radiator. This arrangement serves to protect the radiator from damage and facilitates the work for changing the facing material.

Flooring material for the buildings has also been diversified in recent years. Taking for instance the facing materials alone, there can be cited hard wood, stone, thin-gage wood flooring material, directly-laid sound-insulated flooring material for apartment houses, and soft facing materials such as soft carpet and cushion flooring. So, a radiator for floor heating that can well comply with the requirements on strength, elasticity, heat transfer properties, etc., in use of any of such facing materials has been desired.

Also, request is rising these days for reduction of thickness of the floor heating unit. As a reason, for instance the fact is pointed out that when a floor heating system is introduced in remodeling of a house, certain restrictions are imposed on its institution if the heating unit is of a large thickness due to the factors relating to floor board and the height of the door. The ordinary floor heating panel is of a structure in which a layer of facing material is laminated integrally on the base layer having embedded therein heating medium-passing pipes, with a heat transfer layer interposed between them. With this structure, however, there is a limitation on reduction of thickness of the base layer in view of the size of the piping. Therefore, it is generally considered reasonable to try to reduce the thickness of the facing material layer which is generally about 10 to 20 mm.

Floor heating by means of hot water piping, however, has the problem that, although there scarcely occurs local overheating and radiation can be effected efficiently unlike in the case of floor heating by means of heater, there is a greater risk of damaging the parts including the heat transfer layer comprising aluminum foils and the base layer if the facing material is too much reduced in thickness. Another concern is the probability that the facing material might warp excessively and becomes liable to exfoliate from the panel.

### Brief Description of the Drawing

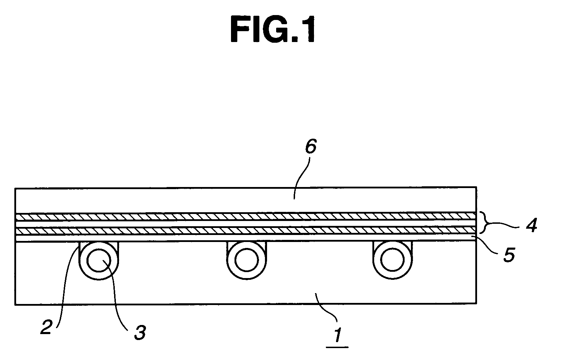

FIG. 1 is a longitudinal sectional view of an example of radiator for floor heating according to the present invention.

### Disclosure of the Invention

In view of the above problems, the present inventors have pursued studies through many years on the structural improvement of floor heating system, and found that a very good result was provided when the metal and resin laminate panel, which has so far been utilized exclusively as exterior building material, was applied to the construction of floor heating system. The present invention has been attained on the basis of the above finding.

Thus, in an aspect of the present invention, there is provided a radiator for floor heating characterized in that a laminate panel obtained by bonding metal plates on both sides of the resin sheet core is disposed on the upper side of a base layer in which piping for passing a heating medium is embedded.

### Best Mode for Carrying out the Invention

The present invention will be described in detail below. First, the structural parts of the radiator for floor heating according to the present invention are explained. As the heating medium passed through heat piping, hot water, steam, heated oil and the like can be used. Hot water is preferred. Usually flexible tubes, such as crosslinked polyethylene tubes, polybutene tubes and copper tubes are used for the said piping. The piping diameter is variable depending on the various factors such as the district where the building is constructed, the site of the building in which the floor heating panel is installed, and the type and temperature of the heating medium used, and generally it is 6 to 10 mm in outer diameter and 4 to 6 mm in inner diameter.

The said piping is embedded in a base layer. The material of the base layer is not specifically defined in the present invention, and usually foamed synthetic resins having good heat-insulating properties are preferred, and the plates made of such foamed synthetic resins are actually used. Specifically, such plate-like foamed synthetic resin products include, for instance, hard polyurethane foam, hard polyethylene foam, hard polypropylene foam, polystyrene foam, hard polyvinyl chloride foam, polymethyl methacrylate foam, polycarbonate foam, polyphenylene oxide foam, and foam of polystyrene and polyethylene mixture. Among these products, hard polyurethane foam and polystyrene foam are preferred. The plate thickness is preferably selected from the range of 6 to 50 mm. A sound insulator such as non-woven fabric may be provided on the lower side of the base layer.

Grooves for embedding the heat piping are formed in the surface of the plate constituting the base layer. The opening width of the grooves is preferably the same as or slightly greater than the outer diameter of the piping. The grooves are preferably so shaped that their cross section cut perpendicularly to the extending direction will be U-shaped, because this shape is suited for embedding the piping. The depth of the grooves is preferably equal to the outer diameter of the piping. If the groove depth is greater than the outer diameter of the piping, a space is formed on the upper side of the piping when it is embedded, so that heat from the heating medium is not transferred effectively to the facing material, resulting in a reduced heat transfer efficiency of the floor heating panel.

The radiator for floor heating according to the present invention is characterized in that a composite board comprising metal plates bonded to both sides of the resin sheet core is disposed on the upper side of the base layer. Such a composite board itself has been known in the art (for example, see Japanese Pat. No. 3,118,066) and used widely as an exterior building material with many advantageous properties such as lightweight, anticorrosiveness, design adaptability, weather resistance, good surface appearance, and metal-like workability.

As the resin sheet material, various types of resin such as polyolefin resin, polystyrene resin, vinyl chloride resin, phenolic resin and urethane resin can be used. Polyolefin resin is preferred. Generally, inorganic filers such as oxide, hydroxide, silicate, carbonate or sulfate of magnesium, calcium, barium or aluminum may be contained in an amount of usually 10 to 80% by weight in the resin for affording flame retardancy.

As the metal plates, for instance the sheets made of a metal such as aluminum, stainless steel, iron, copper, titanium, tin, nickel or the like or their alloys can be used. Aluminum plates are preferred in consideration of workability, heat transfer properties and rigidity.

The producing method of composite board is also not restricted. Usually a method is used in which a base resin material is extrusionally molded to obtain a core sheet, and then metal sheets are bonded on both sides of the said core sheet with an adhesive film interposed between them. As the adhesive film, a film of a thermoplastic resin having affinity for both of the core sheet and metal sheet is used. Examples of such thermoplastic resins include ethylene-acrylic acid copolymer, ethylene-vinyl acetate copolymer, ethylene-glycidyl acrylate copolymer, ethylene-maleic anhydride copolymer, polyethylene-acrylic acid graft copolymer, and polyethylene-maleic anhydride graft copolymer.

Thickness of the composite board used in the present invention is usually 0.5 to 6.0 mm, preferably 0.7 to 5.0 mm. Generally speaking, by thickening the core resin sheet of the composite board, it is possible to elevate rigidity of the board with no compromise in its lightweight characteristics. It should be noted, however, that too large thickness of the resin sheet may impair electroconductivity required for floor heating. In use of the above composite board for the radiator for floor heating according to the present invention, the board is required to have a flexural modulus of usually 1,000 to 10,000 kg/mm², preferably 3,000 to 8,000 kg/mm², because in this range of flexural modulus the board maintains a proper degree of rigidity and elasticity and can offer a good feel to step on. Too low flexural modulus is undesirable because it involves the possibility that the radiating base layer may be damaged in the event when an external force such as static load or impact load is exerted to the board from the facing material. Too high flexural modulus is also unfavorable as the board makes the floor feel too hard to step on.

In view of the above, the layer structure of the composite board is preferably so designed that the resin sheet thickness is 0.5 to 3.0 mm and the metal plate thickness is 0.05 to 1.0 mm. Usually the two metal plates bonded on both sides of the core sheet are substantially of a same material and a same thickness so as to minimize the warpage of the board that may take place during floor heating.

The composite board and the base layer are secured to each other through an adhesive layer. The adhesive force between the composite board and the base layer at 60°C is usually not less than 6 N/20 mm, preferably not less than 8 N/20 mm, chiefly for preventing separation of both layers. When a person walks on the floor fitted with the radiator for floor heating according to the present invention, there is a possibility that sound be generated by stepping on such floor section. In order to perfectly eliminate such possibility, the adhesive material used for the adhesive layer is preferably one whose viscosity at 5°C is not more than 1,200 exp(0.02x)Pa·s where the adhesive layer thickness is supposed to be x *µ*m.

Any type of adhesive material can be used for the adhesive layer as far as the above conditions are satisfied. Usually acrylic, vinyl ester type, natural rubber type and synthetic rubber type adhesives are used, among which acrylic adhesives are preferred in view of their high adhesiveness and heat resistance.

The adhesive may be applied to one or both of the base layer and the composite board, and then they may be bonded to each other, but since this procedure takes much time and labor, it is preferable to use an operation in which a usually 5 to 250 *µ*m thick paper or resin sheet having an adhesive already applied to both sides thereof in an almost equal amount is sandwiched between the composite board and the base layer to form an adhesive layer.

Ideally, the smaller the thickness of the adhesive layer, the more preferable. Usually the adhesive layer thickness is not greater than 300 *µ*m, preferably not greater than 200 *µ*m. If the adhesive layer thickness is greater than this, although adhesiveness is improved and the problem of generation of sound (on stepping on the floor) is alleviated, an excess amount of adhesive is needed to cause poor economy. The lower limit of the adhesive layer thickness is not restricted, but usually if the thickness is less than 30 *µ*m, it is too small to form an adhesive layer which meets the standard requirement of adhesive force. The thickness of the adhesive layer mentioned above with reference to the sheet having an adhesive applied to both sides thereof means the thickness exclusive of the sheet thickness.

The adhesive used for the adhesive layer needs to be selected from those whose viscosity falls within the above-defined range. According to the results of the experiments by the present inventors, sounding in the floor equipped with the radiator for floor heating of a layer structure like that of the present invention is considered to be caused by the separation of the base layer and the adhesive layer at their interface. The adhesive layer after separation is in a state of being stripped at the interface, so it is supposed that when a load such as stepping on the floor by a person is exerted to the layer from above, the layer is again stuck to the base, and when the load is released, the layer is once again stripped at the interface. It is considered that a cycle of these phenomena occurs repeatedly to generate sound. By using an adhesive with higher adhesive force and lower viscosity, it is possible to inhibit this sound generating even if the adhesive layer is made thinner. Generally, higher viscosity of the adhesive provides higher adhesiveness, but when using an adhesive with high viscosity, the adhesive layer tends to become too hard, rather increasing the tendency to generate sound. Too low viscosity of the adhesive is also undesirable as the required adhesive force may not be provided.

In view of the above, it is suggested that on the premise that the adhesive force between the base layer and the composite board is not less than 6 N/20 mm in the temperature zone, viscosity of the adhesive at 5°C should be not more than 1,200 exp(0.02x)Pa·s with the adhesive layer thickness being assumed to be x *µ*m. This formula represents the boundary line derived from many experimental measurements, and more specifically, it indicates that the adhesive viscosity should be not more than 500,000 Pa·s at the adhesive layer thickness of 300 *µ*m, not more than 200,000 Pa·s at 250 *µ*m, not more than 70,000 Pa·s at 200 *µ*m, not more than 20,000 Pa·s at 150 *µ*m, not more than 9,000 Pa·s at 100 *µ*m, and not more than 3,000 Pa·s at 50 *µ*m.

The adhesive force between the composite board and the adhesive layer is usually smaller than that between the base plate and the adhesive layer, which indicates that the problem of separation and sound generating occurs chiefly between the base plate and the adhesive layer.

The radiator for floor heating according to the present invention is usually offered as a floor attachment capable of heating the floor, with a facing material being additionally mounted on the composite board. The facing material functions as a buffer layer serving for protecting the equipment surface, bettering the floor surface appearance and improving the sound-damping and cushioning qualities of the floor. This facing material is preferably plywood or foam rubber plate on which surface is attached a plastic film, non-woven fabric, reinforced paper or such with a printed pattern such as grain pattern thereon. Too small thickness of the facing material may cause shortage of strength to make the material liable to break, while too large thickness hinders heat transfer from the heating unit to the surface of the facing material. Thus, the facing material thickness is usually 1 to 20 mm, preferably 2 to 10 mm.

In case where an especially thin facing material is required, it is recommended to use a 1 to 6 mm thick facing material comprising plywood having 0.1 to 2 mm thick sheets bonded symmetrically on both sides thereof. This range of thickness indicates a smaller thickness of the facing material than the conventional top layer, but the warpage of the surface finishing material, which has been a serious problem in the prior art, can be avoided by adopting the structure of the present invention in which the thin sheets of a substantially same material and a same thickness are attached symmetrically on both sides of plywood. Thus, since the upper and lower sides of the core are of a same material, the difference in expansion and contraction between the upper and lower sides of the core is lessened to allow effective inhibition of warpage. If this composite board thickness is too small, the produced facing material may lack strength and become liable to break. Also, the facing material becomes liable to warp. The standard of the allowable amount of warpage of the facing material with thickness in the above-defined range is usually not more than 0.4 mm, preferably not more than 0.2 mm based on 100 mm of length in the longitudinal direction and not more than 1.0 mm, preferably not more than 0.5 mm based on 100 mm of length in the width direction. Such facing material is not restricted by the structure and type of the radiator for floor heating in which the facing material is installed.

The plywood used for the facing material may be properly selected from those commonly used for building materials and having a desired thickness. As the sheets attached on both sides of the plywood, usually 10 to 200 µm thick film or paper sheets are used. The sheets are stuck firmly to the plywood with an ordinary adhesive. The sheet surface may be decorated with a pattern, such as grain pattern, for the aesthetic effect.

It is usually preferable that the facing material be bonded to the composite board. As means for bonding, it is possible to select any optional means such as, for example, a method using an adhesive capable of bonding the facing material to a synthetic resin layer and non-corrosive to both of them, or a method in which a double-sided adhesive tape is attached to the facing material. The method using a double-sided adhesive tape is especially preferred because of ease of the works such as replacement of surface finishing material.

The radiator for floor heating according to the present invention, when actually applied as a floor heating equipment, is usually not laid throughout the whole room space, and there normally exist the so-called dummy portions, where no heating pipes are passed, between the base layers or at the ends of the rooms, such dummy portions being usually filled up with wood or foamed resin. Composite boards may be disposed above these dummy portions, and facing materials may be further mounted thereon. The base layers and dummy portions may be secured to the floor boards with an adhesive or by nailing. In the case of nailing, it is preferable to use universal screws differing alternately in flight depth. Such universal screws are preferred as they excel in working efficiency at the tip-cut screw end, show good biting performance and high holding force, and also rarely cause wood cracking.

The site of installation of the radiator for floor heating of this invention may be, for instance, above the slab floor surface or the backing plywood laid on the slab floor surface in the case of concrete buildings, and above the backing plywood in the case of wooden houses. It may be installed on the properly worked existing floor boarding.

Regarding the construction work of the floor heating portion and the dummy portion, it is ideal if both portions can be constructed simultaneously with ease. Under the existing circumstances, however, simultaneous construction is impossible since construction of the dummy portion is classified legally under the category of building work in Japan, so that the equipment work tends to become complicated. In case where a resin foam used for the base layer of a floor heating mat is filled in the dummy portion, a great deal of nailing is required for perfect fixation. Also, in case of fixing the resin foam with an adhesive, there arise the problems that adhesion may become defective to cause separation due to uneven thickness of the applied adhesive layer, and that it is necessary to place a weight on the resin foam and cure it for a long time so that it won't exfoliate.

As a means that can solve these problems, there is proposed the following floor heat-insulating panel. Namely, that is a flooring heat-insulating panel in which the panel on the floor in the space between the periphery of a floor heating mat laid on the floor of a room and the inner wall surface of said room, and/or in the section where the floor heating mat is not laid, comprises a resin foam, and on the rear side of said panel, there are provided many substantially uniform shallow groove pitches and the deep groove pitches formed at constant intervals. This panel is laid in a floor space between the periphery of the floor heating mat spread on the room floor surface and the inner wall of the room, and/or at a floor section where the floor heating mat is absent. The panel comprises a resin foam and is characterized in that on the back side thereof, there are provided many, substantially uniform shallow groove pitches as well as the deep groove pitches formed at constant intervals.

Such a floor heat-insulating panel is not restricted in its application by the structure and type of the radiator for floor heating in which the panel is installed, and can be used widely. In this panel applied to a mat used in the dummy portion, specific pitches are provided unevenly on the back side of the panel made of a resin foam, making it possible to adjust the spread of the adhesive and to attach the panel securely to the floor surface with the aid of an adhesive.

This floor heat-insulating panel comprises a resin foam and is characterized in that it has on its back side many, substantially uniform shallow groove pitches as well as the deep groove pitches formed at constant intervals. The shallow groove pitches are of a groove-like configuration measuring 1 to 4 mm in depth and 1 to 5 mm in opening width and are formed substantially uniformly at intervals of 1 to 30 mm. They may have a slightly rising convex form at the part close to the opening. When the groove depth exceeds 4 mm, the amount of the adhesive applied tends to increase greatly. The concave portion of the shallow groove may have a half-circular, U-like (round corner), V-like, U-like (angular) or other shape at the section cut perpendicularly to the extending direction of the groove, but their shape is not specifically restricted.

As described above, the lightweight heat-insulating panel is attached to the floor surface with an adhesive. If no shallow groove pitches such as mentioned above are not provided on the rear side of the panel, perfect bonding may not be effected, or even if the panel could be once bonded, partial exfoliation may occur to cause a lift of the panel. A similar tendency is also seen with the base panel in a floor heating mat, but in the latter case, the above problem is alleviated as the whole panel is substantially held down from above by laying the heated fluid pipes, etc., dispersedly. Owing to these shallow groove pitches, the adhesive applied on the rear side of the panel is allowed to enter efficiently into the grooves, effecting secure attachment of the panel to the floor. Adhesion at the groove surface can also be improved by making use of surface tension of the adhesive.

The deep groove pitches are of a depth and an opening width which are both usually more than double those of the shallow groove pitches. That is, these deep groove pitches have a groove-like configuration, a depth of 4 to 40 mm and an opening width of 2 to 10 mm, and formed at intervals of 50 to 300 mm. The depth of these pitches is usually 10 to 80% of the panel thickness. They may have a slightly rising convex elevation at the part close to the opening. Such deep groove pitches alone can not produce a significant adhesion improving effect like the shallow groove pitches, but by providing the shallow groove pitches, it becomes possible to absorb unevenness caused by warping of the panel or other factors, allowing the panel to well conform to the adhesive on the floor.

In use of the said heat-insulating panel for a room in combination with a floor heating mat, first an adhesive is applied to the rear side of the panel having pitches and the panel is set on the floor. The height of the heat-insulating panel is usually adjusted to the height of the base panel of the floor heating mat. Then, on the panel, there are provided the same layers, viz. heat transfer layer and surface finish, as provided on the base layer of the floor heating mat. The floor heating mat is designed to a shape and a size that allow easy working, and plural pieces of such mat may be laid on the floor.

The present invention is described more particularly with reference to the accompanying drawing, but it is to be understood that the invention is not limited to the embodiment described below.

In FIG. 1, reference numeral (1) denotes an 11 mm thick foamed polystyrene base layer, (2) denotes grooves measuring 7.2 mm in both opening width and depth, (3) denotes heating piping (crosslinked polyethylene-made flexible tubes for passing heating medium) having an outer diameter of 7.2 mm and an inner diameter of 5 mm, and (4) denotes an aluminum and resin composite board having a laminate structure of aluminum/low density polyethylene-containing composition/aluminum (= 0.115 mm/0.770 mm/0.115 mm, overall thickness 1 mm) (available from Mitsubishi Chemical Functional Products, Inc. under the trade name of ALPOLIC; flexural modulus 4,600 kg/mm²). Between this composite board and base layer (1) is interposed a 50 *µ*m thick adhesive layer (5) formed by applying an acrylic adhesive (viscosity at 5°C: 7X10⁴ Pa·s) on both sides of a rayon paper (basis weight: 13 g/m²). Further, facing material (6) is bonded to the upper side surface of the metal composite board (4) with a double-sided adhesive tape (not shown).

Determination of adhesive force, a packing test and a sounding test described below were conducted on the radiator of the above structure. Results showed that the adhesive force was 7 N/20 mm, no separation took place, and no sound was generated.

### (1) Determination of adhesive force

Adhesive force was determined by stripping off the adhesive tape through 90° according to JIS Z 0237.

### (2) Separation test

The packed radiator was placed in a 60°C oven, left therein for one week and then checked for separation between the metal plates and the base layer.

### (3) Sounding test

Compression load was given to a 50 (width) x 303 sample of the radiator from above thereof by a loading rod R25 at a speed of 100 m/min and a stroke of 10 mm, observing whether sound was generated and confirming the type of sound generated if any.

Also, a facing material (6) having a layer structure of decorative paper (0.1 mm thick)/plywood (2.8 mm thick)/decorative paper (0.1 mm thick) was subjected to the test described below. The amount of warpage was 0.2 mm/100 mm in the longitudinal direction and 0.5 mm/100 mm in the width direction, which confirmed no problem of warpage with this radiator.

### (Facing material warpage test)

Samples of facing material (909 mm long and 303 mm wide) were left in a 60°C oven for 144 hours and then returned to room temperature, after which the amount of warpage of each sample was measured. The amount of warpage was determined by placing a deflection-free bar (weighing less than 60 g in the longitudinal direction and less than 20 g in the width direction) against an end of the flooring material in the concave warping direction, and measuring the distance between the center of the concavity and the bar.

### Industrial Applicability

In the radiator for floor heating according to the present invention, a composite board made by attaching metal plates on both sides of the resin sheet core is disposed on the base layer having embedded therein the piping for passing a heating medium, with various types of facing material being additionally fitted thereon, so that in use of the radiator as a floor heating equipment, the following effects can be anticipated. These effects are particularly conspicuous in a radiator using thin facing material.
(1) A floor with moderate rigidity and elasticity, hence a good feel to step on, is formed.
(2) Floor heating efficiency is high because of excellent heat transfer properties.
(3) By use of the metal/resin/metal symmetric structure, the composite board has moderate strength and elasticity, and is minimized in warpage and hardly deformed, so that its quality can be maintained for a long time.
(4) The composite board also excels in strength, and the radiator base layer is resistant to damage in the event of trouble such as drop of a heavy object on the floor.
(5) The composite board is easy to handle and can be easily worked, so that the radiator using it has high productivity. Site work of such a radiator is also easy.

## Claims

1. A radiator for floor heating comprising a base layer having embedded therein piping for passing a heating medium and a composite board which is disposed on the upper side of said base layer and which is formed by bonding metal plates on both sides of a resin sheet core.

2. The radiator according to Claim 1, wherein the flexural modulus of the composite board is 1,000 to 10,000 kg/mm².

3. The radiator according to Claim 1 or 2, wherein the thickness of the composite board is 0.5 to 6.0 mm.

4. The radiator according to any one of Claims 1 to 3, wherein the thickness of the resin sheet is 0.5 to 3.0 mm and the thickness of the metal plates is 0.05 to 1.0 mm.

5. The radiator according to any one of Claims 1 to 4, wherein the base layer and the composite board are secured to each other through the medium of an adhesive layer, and the viscosity of the adhesive of the adhesive layer at 5°C is not more than 1200 exp(0.02x)Pa·s where the thickness of the said adhesive layer is assumed to be x µm.

6. The radiator according to Claim 4, wherein the thickness of the adhesive layer is not more than 300 *µ*m.

7. A heatable floor structure comprising the radiator for floor heating according to any one of Claims 1 to 6 and a facing material disposed on the upper side of radiator.

8. The floor structure according to Claim 7, wherein the thickness of the facing material is 1 to 10 mm.

9. The floor structure according to Claim 7 or 8 wherein the facing material is a composite board having a thickness of 1 to 6 mm and made by bonding 0.1 to 2 mm thick sheets on both sides of plywood.

10. A facing material for floor heating made by bonding 0.1 to 2 mm thick sheets on both sides of plywood and having a thickness of 1 to 6 mm.

11. A floor heat-insulating panel in which the panel on the floor in the space between the periphery of a floor heating mat laid on the floor of a room and the inner wall surface of said room, and/or in the section where the floor heating mat is not laid, comprises a resin foam, and on the rear side of said panel, there are provided many substantially uniform shallow groove pitches and the deep groove pitches formed at constant intervals.
